# FASCICULE DE BREVET EUROPEEN

(11) **EP 4 034 430 B1**
(45) Date de publication et mention de la délivrance du brevet: **05.06.2024**
(21) Numéro de dépôt: 20789002.1
(22) Date de dépôt: 25.09.2020
(51) Int. Cl.: B60R 13/08, G10K 11/162

(54) **DISPOSITIF D'ABSORPTION ACOUSTIQUE**
SCHALLABSORPTIONSVORRICHTUNG
SOUND ABSORPTION DEVICE

(30) Priorité: 25.09.2019 FR 1910592
(43) Date de publication de la demande: 03.08.2022
(73) Titulaire: Demguilhem, Stéhane, 33360 Quinsac (FR)
(72) Inventeur: Demguilhem, Stéhane, 33360 Quinsac (FR)
(74) Mandataire: Aquinov
(86) Numéro de dépôt international: PCT/EP2020/076983
(87) Numéro de publication internationale: WO 2021/058787

(56) Documents cités:
- WO-A1-2018/162014
- CN-B- 102 737 627
- FR-A1- 2 817 995
- US-A1- 2019 244 596
- US-B1- 9 738 796
- US-B1- 10 359 163

## Description

L'invention concerne un dispositif d'absorption acoustique.

Dans tous les espaces de vie et les espaces de travail, le confort acoustique est un paramètre très important. En effet, le confort acoustique a un rôle important dans la concentration, la fatigue, le stress et la performance intellectuelle. Tout facteur lié à la qualité acoustique d'un espace est donc important à considérer.

Dans des bâtiments comprenant une faible isolation acoustique, la réverbération des différents sons peut générer une mauvaise acoustique.

Les espaces de travail collectif ou les espaces bruyants comme des ateliers techniques et industriels peuvent engendrer des niveaux sonores importants, difficilement admissibles et inconfortables, avec des valeurs égales ou supérieures à 100dB. Par exemple, un bâtiment métallique ne présente aucune capacité à absorber les bruits et accentue plutôt la réverbération des bruits intérieurs formant un volume de résonnance acoustique.

De nombreux matériaux et surfaces acoustiques ont été développés et permettent, une fois disposés sur les murs, d'absorber les sons. Cette solution bien connue, est particulièrement utilisée dans les studios d'enregistrement musicaux pour éviter toute réverbération et parasitisme sonore afin d'obtenir la meilleure qualité acoustique possible. Ces matériaux peuvent également être appliqués sur des surfaces murales de cantines, écoles ou autres lieux bruyants. Le recouvrement de surfaces murales avec ce type de revêtement acoustique peut néanmoins coûter très cher et ne convient pas aux bâtiments industriels ou à certaines applications par exemple lorsque les cloisons sont trop éloignées et que les volumes sont très importants. De plus, certains bruits, générés ponctuellement nécessitent d'être isolés plus localement. Par exemple les bruits émis sur une zone émettrice de bruit avec un poste de travail sur lequel sont utilisés des machines ou des outils bruyants, ou bien des tables de restaurants, nécessitent plutôt une isolation appliquée à proximité directe de la source de bruit. Le document CN 102 737 627 concerne un absorbeur acoustique comprenant des barres avec des longueurs différentes, ledit dispositif comportant des moyens support, des moyens d'accroche et des moyens d'absorption sonore. Le document US 10 359 163 divulgue un dispositif d'absorption acoustique d'une zone émettrice de bruits, ledit dispositif comportant des moyens support, des moyens d'accroche et des moyens d'absorption sonore. le document FR 2 817 995 divulgue un complexe d'absorption acoustique dans lequel le matériau absorbant peut être réalisé sous la forme de mousse, de feutre, de déchets de pneu, de tissu, de papier ou de moquette. Le document US 2019/244596 divulgue un diffuseur-absorbeur acoustique comprenant des barres avec des longueurs différentes. La longueur des barres est déterminée par l'inverse de la séquence des résidus quadratiques (QR).

Il conviendrait de disposer d'un élément pouvant être installé aisément à proximité des sources de nuisances sonores et des espaces nécessitant d'être isolés.

La présente invention propose un dispositif acoustique pouvant être suspendu et placé au-dessus de la source de bruit et qui présente une capacité d'absorption sonore élevée. A cet effet le dispositif d'absorption acoustique d'une zone émettrice de bruits, comporte des moyens support, des moyens d'accroche et des moyens d'absorption sonore dans lequel les moyens support comprennent un plan support sur lequel sont rapportés lesdits moyens d'absorption sonore, dirigé vers ladite zone émettrice de bruits.

Le dispositif permet de transformer l'énergie cinétique du son porté par les molécules d'air en énergie mécanique par les fibres constituant les moyens d'absorption sonore.

Le plan support est un plan support rigide comprenant une pluralité d'ouverture, chaque barre passant dans une ouverture du plan support. En d'autres termes, le nombre d'ouverture est égal au nombre d'éléments d'absorption sonore. Les éléments d'absorption s'étendent longitudinalement et verticalement à partir d'un plan support et sont alignés et espacés l'un par rapport à l'autre suivant le plan comprenant le plan support.

Selon l'invention, le dispositif comportant des moyens support, des moyens d'accroche et des moyens d'absorption sonore, et les moyens support comprennent un plan support sur lequel sont rapportés lesdits moyens d'absorption sonore, dirigé vers ladite zone émettrice de bruits.

Selon l'invention, les moyens d'absorption sonore sont constitués de plus de deux barres.

Chaque barre est au moins partiellement formée par une matière avec une densité comprise entre 12 kg/m3 et 24 kg/m3.

Selon l'invention, chaque barre est constituée de mousse ou de ouate absorbant les bruits.

Selon l'invention, les barres sont de longueurs différentes. Avantageusement les barres sont de sections, de densités différentes.

Avantageusement la longueur de chaque barre est de plus en plus courte suivant que le positionnement de chaque barre est central. Ainsi les barres placées en périphérie du plan support sont plus longues que les barres placées en partie centrale du plan support, la longueur desdites barres diminuant au fur et à mesure que l'on se rapproche du centre du dispositif d'absorption,

En variante, les barres sont organisées en au moins un alignement de barre, d'une première densité de matière et un alignement de barre, d'une seconde densité de matière. Les alignements de barres sont espacés et positionnés en quinconce et les barres sont décalées entre elles si bien qu'une barre d'une certaine densité est uniquement alignée avec une autre barre de même densité. La longueur des barres est de plus en plus courte suivant que leur positionnement est central. Ainsi les barres placées en périphérie du dispositif d'absorption sont donc plus longues que les barres placées en partie centrale du plan support, la longueur desdites barres diminuant au fur et à mesure que l'on se rapproche du centre du dispositif d'absorption.

Les extrémités inférieures des barres de longueurs différentes forment un espace parabolique, notamment ouvert.

Avantageusement le plan support comprend au moins une ouverture permettant à la au moins une barre de traverser ledit plan support, une goupille assurant le maintien de chaque au moins une barre sur ledit plan support.

Avantageusement, l'extrémité supérieure des barres est rapportée par collage sur la face inférieure du plan support.

Avantageusement, les différentes barres sont réalisées en au moins deux matières.

Avantageusement, les moyens d'accroche sont formés par des suspentes reliées au plan support.

En variante, les moyens d'accroche peuvent également être rigides avec des tiges, par exemple dans le cas où le dispositif d'absorption est directement fixé au plafond par clipsage

Le dispositif comporte un organe de réglage de la hauteur du plan support vis-à-vis d'une zone émettrice de bruit. De la sorte, il est possible de régler la hauteur du dispositif pour s'adapter à la dimension de la zone émettrice de bruit. Si l'utilisateur travaille sur une petite surface émettrice de bruit, le dispositif peut être rapproché de cette zone, au contraire, si l'utilisateur travaille sur un objet de grande dimension avec une zone émettrice de bruit plus étendue, alors le dispositif peut être éloigné de cette zone de manière à couvrir une zone émettrice de bruit étendue

La présente invention est maintenant décrite à l'aide d'exemples uniquement illustratifs et nullement limitatifs de la portée de l'invention, et à partir des illustrations jointes, dans lesquelles :
[Fig. 1] ou figure 1 représente une vue en perspective du dispositif d'absorption acoustique selon l'invention.
[Fig. 2] ou figure 2 représente une vue de face du dispositif d'absorption acoustique de la figure 1.
[Fig. 3] ou figure 3 représente une vue de dessus en perspective du dispositif d'absorption acoustique selon l'invention.
[Fig. 4] ou figure 4 représente une vue de face d'un dispositif d'absorption mis en place au-dessus d'un poste de travail.

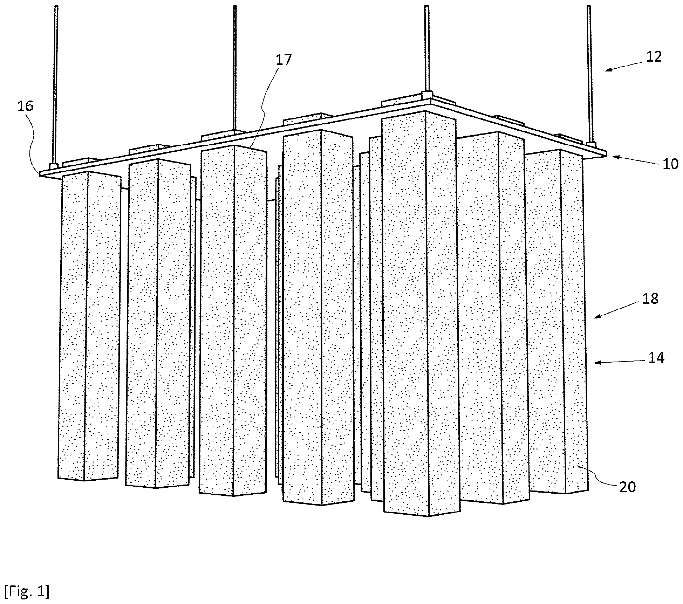

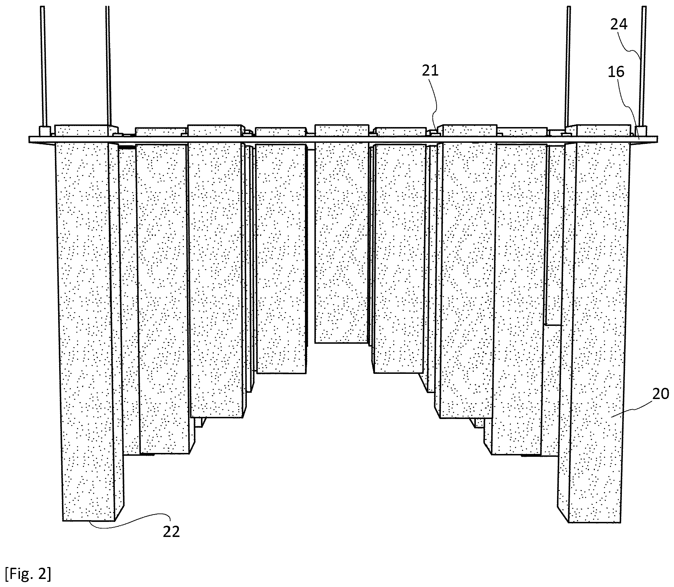

On considère l'ensemble des figures 1 à 4 dans un repère orthogonal X, Y et Z. Le dispositif d'absorption acoustique comprend des moyens support 10, des moyens d'accroche 12 et des moyens d'absorption sonore 14. Les moyens support 10 sont formés par un plan support 16 rigide comportant au moins une ouverture 17 à travers laquelle passe un élément d'absorption sonore 18. L'élément d'absorption sonore 18 est formé par des barres 20. Chaque barre 20 passe dans une ouverture 17 du plan support 16 et se trouve maintenue verticalement par une goupille 21, formée par un axe, qui traverse lesdites barres 20 suivant le plan X, Y et qui sont placées au-dessus du plan support 16. La goupille 21 permet de démonter chaque barre 20 indépendamment pour facilement la nettoyer ou la remplacer. Le nombre d'ouverture 17 est égal au nombre d'éléments d'absorption sonore 18. Le dispositif d'absorption acoustique comporte donc au moins un élément d'absorption sonore 18. Dans les configurations représentées sur les figures 1 à 4, vingt-trois éléments d'absorption sonore 18 sont mis en place à travers les ouvertures 17 réalisées dans le plan support 16. Les éléments d'absorption 18 sont réalisés par des barres 20 étendues longitudinalement et verticalement à partir d'un plan support 16, suivant l'axe Z. Les barres 20 sont réparties de manière organisée et sont alignées et espacées l'une par rapport à l'autre suivant le plan X, Y du repère orthogonal comprenant le plan support 16. Les barres 20 peuvent être de longueur identique mais pour augmenter la performance d'absorption acoustique, les barres 20 ont ici une longueur différente, comme représenté sur la figure 2. Cet autre agencement décrit une configuration dans laquelle la longueur de chaque barre 20 est de plus en plus courte suivant que le positionnement de chaque barre 20 est central. Ainsi les barres 20 placées en périphérie du plan support 16 sont plus longues que les barres 20 placées en partie centrale du plan support 16, la longueur desdites barres 20 diminuant au fur et à mesure que l'on se rapproche du centre du dispositif d'absorption, dans le plan X, Y. L'ensemble des extrémités inférieures 22 des barres 20 forment ainsi, ensembles, un espace parabolique ouvert vers le bas, si l'on considère une surface sensiblement parabolique qui passe par l'extrémité de chaque barre 20.

Les barres 20, décrites comment étant retenues verticalement par une goupille 21 peuvent également être collées par l'une de leur extrémité, en l'occurrence l'extrémité supérieure. Dans ce dernier cas, les barres 20 ne traversent pas le plan support 16 mais s'étendent depuis ledit plan support 16 vers le bas, suspendues.

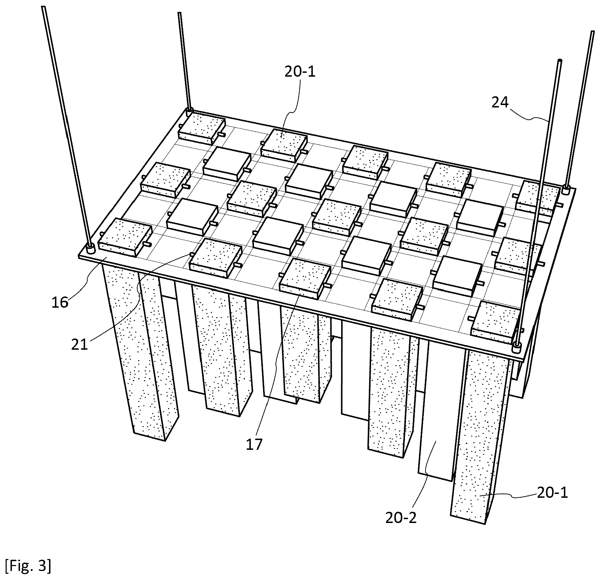

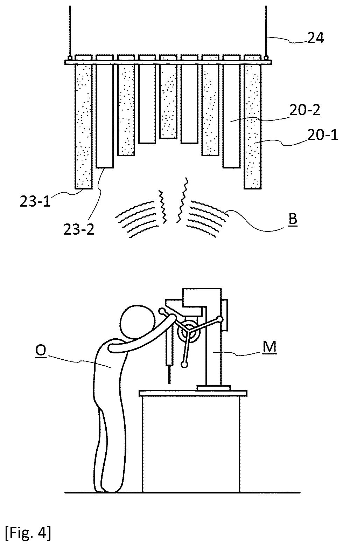

Dans un autre agencement, représenté sur les figures 3 et 4, le dispositif d'absorption acoustique est muni d'au moins deux types de barres 20-1 et 20-2. Lesdites barres 20-1 et 20-2 sont également maintenues sur le plan support 16 par des goupilles 21. Chacun desdits au moins deux types de barre 20-1 et 20-2 a une longueur et/ou une densité de matière différente et/ou est réalisé en au moins deux matières. Un agencement est représenté sur la figure 3, et comprend un alignement de barre 20-1, d'une première densité de matière et un alignement de barre 20-2, d'une seconde densité de matière. La matière utilisée ici est de la ouate présentant des qualités phoniques performantes mais aussi des qualités environnementales de façon à assurer notamment un recyclage ou une destruction non polluante de cette matière qui présente l'avantage de ne pas dégager de composés organiques volatils. Les alignements de barres 20-1 et 20-2 sont également espacés et positionnés en quinconce et les barres 20-1 et 20-2 sont décalées entre elles si bien qu'une barre 20-1 d'une certaine densité est uniquement alignée avec une autre barre 20-1 de même densité. La longueur des barres 20-1 et 20-2 est de plus en plus courte suivant que leur positionnement est central. Ainsi les barres 20-1 et 20-2 placées en périphérie du dispositif d'absorption sont donc plus longues que les barres 20-1 et 20-2 placées en partie centrale du plan support 16, la longueur desdites barres 20-1 et 20-2 diminuant au fur et à mesure que l'on se rapproche du centre du dispositif d'absorption. Les barres 20-1 et 20-2 comportent chacune une extrémité 23-1 et 23-2, ces extrémités formant ensemble un espace parabolique ouvert vers le bas. Néanmoins, de multiples combinaisons sont possibles. Dans une autre configuration non représentée, les barres 20-1 et 20-2 peuvent être de géométrie différente, de section carrée, hexagonale, triangulaire, ou même être un polygone irrégulier. Les barres 20-1 et 20-2 peuvent également avoir une densité identique ou différente. Les moyens d'accroche 12 sont formés par des suspentes 24 reliées au plan support 16 et pouvant être accrochées, à un plafond, des poutres ou un support ménagé spécifiquement, le poids du dispositif selon l'invention ayant un volume important mais un poids réduit. Les moyens d'accroche peuvent également être rigides avec des tiges, dans le cas où le dispositif d'absorption est directement fixé au plafond par clipsage.

Les barres 20 sont formées par une matière ayant des performances d'absorption sonore élevées, comme ici en ouate et peuvent également être formées en mousse ou en toute autre matière à haute capacité d'absorption phonique, légère, notamment avec une densité comprise entre 12 kg/m3 et 24 kg/m3.

La figure 4 représente le dispositif d'absorption acoustique de la figure 3, suspendu à l'aide de suspentes 24 au-dessus d'un poste de travail comportant une machine M utilisée par un opérateur O. Le bruit B, de la zone émettrice de bruits, représenté par des ondes, se propage vers l'opérateur O et vers le haut, donc vers le plafond où le bruit est amorti, ce qui protège les espaces volumiques adjacents et les personnes qui s'y trouvent.

La mise en oeuvre du dispositif d'absorption de la présente invention est maintenant décrite. Le dispositif d'absorption acoustique est destiné à être accroché ou suspendu afin d'être positionné au-dessus et au plus près d'une source de bruit. Il est donc intéressant de positionner le dispositif d'isolation acoustique au plus près de la source de bruit. Un poste d'atelier sur lequel un travail manuel avec des chocs est opéré, génère des bruits de natures et de fréquences très différentes. Il est donc intéressant de pouvoir disposer d'un dispositif d'absorption capable d'absorber et d'atténuer au mieux ces différents sons. Le dispositif d'absorption acoustique décrit ici, propose de maximiser l'atténuation de ces différents sons en utilisant un agencement d'au moins deux barres 20-1 et 20-2, de natures différentes et de longueurs différentes. La mise en place de barres 20-1 et 20-2 de densités différentes permet donc l'atténuation de sons de fréquences différentes car chaque densité de matière absorbante a une certaine capacité à absorber une certaine plage de fréquences du bruit émis et ainsi améliorer la qualité de l'environnement acoustique. Le positionnement du dispositif d'absorption acoustique au-dessus du poste de l'opérateur O et de la machine M donnée en exemple pour illustrer une source de bruit à spectres de fréquences multiples, permet la captation d'une très grande partie du bruit B généré. Les suspentes 24 permettent le positionnement en hauteur souhaité pour assurer la meilleure absorption. Les bruits composés de puissances et de fréquences différentes sont alors captés par au moins deux types de barres 20-1 et 20-2 qui, de par leurs densités différentes, captent chacune des spectres de fréquence différents. Il est donc possible de choisir au moins deux types de barres en fonction des différents bruits générés, aigus, graves, d'intensités et de fréquences sonores différentes.

La pose de dispositif d'absorption peut être multipliée et développée sur mesure en fonction des différentes activités et des différents types de nuisance.

## Revendications

1. Dispositif d'absorption acoustique d'une zone émettrice de bruits, ledit dispositif comportant des moyens support (10), des moyens d'accroche (12) et des moyens d'absorption sonore (18), **caractérisé en ce que** :
- les moyens support (10) comprennent un plan support (16) sur lequel sont rapportés lesdits moyens d'absorption sonore (18), dirigé vers ladite zone émettrice de bruits
- les moyens d'absorption sonore (18) sont constitués de plus de deux barres (20), chaque barre (20) étant de longueur différente ;
∘ chaque barre (20) étant constituée de mousse ou de ouate absorbant les bruits
et **en ce que** les extrémités inférieures (22) des barres (20) de longueurs différentes forment un espace parabolique ouvert.

2. Dispositif d'absorption acoustique selon la revendication 1,
**caractérisé en ce que** les barres (20) sont de section et de densité différentes.

3. Dispositif d'absorption acoustique selon l'une des revendication 1 ou 2, **caractérisé en ce que** le plan support (16) comprend des ouvertures (17) permettant aux barres (20) de traverser le plan support (16), une goupille (21) pour chaque barre (20) assurant le maintien des barres (20) sur ledit plan support (16).

4. Dispositif d'absorption acoustique selon l'une des revendications 1 ou 2, **caractérisé en ce que** l'extrémité supérieure des barres (20) est rapportée par collage sur la face inférieure du plan support (16).

5. Dispositif selon l'une des revendications précédentes **caractérisé en ce que** les différentes barres (20) sont réalisées en au moins deux matières.

6. Dispositif d'absorption acoustique selon l'une quelconque des revendications précédentes, **caractérisé en ce que** les moyens d'accroche (12) sont formés par des suspentes (24) reliées au plan support (16).

## Patentansprüche

1. Schallabsorptionsvorrichtung einer geräuschemittierenden Zone, wobei die Vorrichtung Trägermittel (10), Befestigungsmittel (12) und Schallabsorptionsmittel (18) umfasst, **dadurch gekennzeichnet, dass**:
- die Trägermittel (10) eine Trägerebene (16) umfassen, an der die Schallabsorptionsmittel (18) zur geräuschemittierenden Zone gewandt befestigt sind
- die Schallabsorptionsmittel (18) aus mehr als zwei Stäben (20) bestehen, wobei jeder Stab (20) unterschiedlich lang ist;
o jeder Stab (20) aus geräuschabsorbierendem Schaumstoff oder geräuschabsorbierender Watte besteht
und **dass** die unteren Enden (22) der Stäbe (20) unterschiedlicher Länge einen offenen parabolischen Raum bilden.

2. Schallabsorptionsvorrichtung nach Anspruch 1,
**dadurch gekennzeichnet, dass** die Stäbe (20) einen unterschiedlichen Querschnitt und eine unterschiedliche Dichte aufweisen.

3. Schallabsorptionsvorrichtung nach einem der Ansprüche 1 oder 2,
**dadurch gekennzeichnet, dass** die Trägerebene (16) Öffnungen (17) aufweist, durch die die Stäbe (20) die Trägerebene (16) durchsetzen können, wobei der Halt der Stäbe (20) an der Trägerebene (16) durch einen Stift (21) für jeden Stab (20) sichergestellt wird.

4. Schallabsorptionsvorrichtung nach einem der Ansprüche 1 oder 2,
**dadurch gekennzeichnet, dass** das obere Ende der Stäbe (20) durch Kleben an der Unterseite der Trägerebene (16) befestigt ist.

5. Vorrichtung nach einem der vorstehenden Ansprüche,
**dadurch gekennzeichnet, dass** die verschiedenen Stäbe (20) aus mindestens zwei Materialien gefertigt sind.

6. Schallabsorptionsvorrichtung nach einem der vorstehenden Ansprüche, **dadurch gekennzeichnet, dass** die Befestigungsmittel (12) durch mit der Trägerebene (16) verbundene Aufhänger (24) gebildet sind.

## Claims

1. A sound absorption device for a noise-emitting area, said device comprising support means (10), attachment means (12) and sound absorption means (18), **characterized in that:**
- the support means (10) comprise a support plane (16) on which said sound absorption means (18) are attached, directed toward said noise-emitting area
- the sound absorption means (18) consist of more than two bars (20), each bar (20) being of a different length;
o each bar (20) being made of noise-absorbing foam or wadding
and **in that** the lower ends (22) of the bars (20) of different lengths form an open parabolic space.

2. The sound absorption device according to claim 1, **characterized in that** the bars (20) have different cross-sections and densities.

3. The sound absorption device according to one of claims 1 or 2,
**characterized in that** the support plane (16) comprises openings (17) allowing the bars (20) to pass through the support plane (16), a pin (21) for each bar (20) holding the bars (20) on said support plane (16).

4. The sound absorption device according to one of claims 1 or 2,
**characterized in that** the upper end of the at bars (20) is attached by bonding to the underside of the support plane (16).

5. The device according to one of the preceding claims,
**characterized in that** the various bars (20) are made of at least two materials.

6. The sound absorption device according to any one of the preceding claims, **characterized in that** the attachment means (12) are formed by suspension cords (24) connected to the support plane (16).
